# EUROPEAN PATENT APPLICATION

(11) **EP 3 493 483 A1**
(43) Date of publication of application: **05.06.2019**
(21) Application number: 17833602.0
(22) Date of filing: 28.07.2017
(51) Int. Cl.: H04L 12/46

(54) **VIRTUAL BROADBAND ACCESS METHOD, CONTROLLER, AND SYSTEM**

(30) Priority: 28.07.2016 CN 201610609099
(71) Applicant: ZTE Corporation, Shenzhen, Guangdong 518057 (CN)
(72) Inventor: WU, Bo, Shenzhen Guangdong 518057 (CN)
(74) Representative: Aipex B.V.
(86) International application number: PCT/CN2017/094985
(87) International publication number: WO 2018/019299

(57) **Abstract**

A virtual broadband access method includes: receiving a user access protocol message from a user equipment; selecting a broadband network gateway control pool instance for the user equipment according to a service deployment policy; completing an access, an authentication, or the access and the authentication with the user equipment according to the user access protocol message, and generating a user table; generating a user data forwarding table according to the user table; and receiving a user data message, and forwarding the user data message according to the user data forwarding table.

## Description

### TECHNICAL FIELD

The present disclosure relates to a communication field, and in particular, to a virtual broadband access method, controller and system.

### BACKGROUND

With the popularity of Internet applications and broadband services, operators have provided more network services for broadband users, such as security, virtual network, filtering, load balancing, multimedia and multimedia enhancement. Operators generally use dedicated equipment or router-dedicated service boards to provide services.

The deployment of dedicated equipment or the use of dedicated service boards on routing architectures known in a related art is high in price and complex and time consuming in the entire deployment process, which is unable to rapidly deploy hardware to support services for network operators. In addition, the deployment and maintenance of dedicated equipment or service boards is expensive and in need of specific customization and manual configuration. The wired data communication network provides Internet access and Internet value-added services for home users and enterprise users. The access control is implemented by dedicated devices such as a Broadband Remote Access Server (BRAS), a service router (SR), and a Broadband Network Gateway (BNG). However, the wired data communication network has many users, large traffic, and complicated services.

The virtualization technology adopts a general hardware architecture, and a resource pooling management may be carried out on the general hardware, making it flexible in the service deployment control. The number of users in the Central Office (CO) network of a single switch is huge, ranging from 10,000 to hundreds of thousands. Two virtualization solutions are provided by the Broadband Forum (BBF) standard organization to solve the service flexibility problem. One is to allocate each user a virtual Custom Premise Equipment (VCPE), and the other is to virtualize the entire service device.

### SUMMARY

The following is a summary of a subject matter described herein in detail. This summary is not intended to limit the scope of the claims.

If each user is allocated with a virtual custom premise equipment, the number of equipment is too large. Generally, a server rack at most implements thousands of users. If there are hundreds of thousands of users, hundreds of server racks are needed, which occupies large area and consumes large power. If the entire service device such as a Broadband Network Gateway (BNG), is virtualized, high-performance forwarding is also unable to achieve based on the server architecture.

Dedicated devices may be deployed or dedicated service boards may be used on the routing architecture, which are high in price and complex and time consuming in the entire deployment process. Virtualization technologies adopt a general hardware architecture, which occupies large area and consumes large power and cannot implement high-performance forwarding based on the server architecture.

A virtual broadband access method, controller and system are provided herein, which can avoid deploying dedicated devices or using dedicated service boards on the routing architecture which are high in price and complex and time consuming in the entire deployment process. Virtualization technologies adopt a general hardware architecture, which occupies large area and consumes large power and cannot implement high-performance forwarding based on the server architecture.

An embodiment of the present disclosure provides a virtual broadband access method applied in a virtual broadband access system. The virtual broadband access system includes a repeater, a controller and a broadband network gateway control pool. The method includes:
receiving a user access protocol message from a user equipment;
selecting a broadband network gateway control pool instance for the user equipment according to a service deployment policy;
completing, according to the user access protocol message, an access, an authentication, or the access and the authentication with the user equipment, and generating a user table;
generating a user data forwarding table according to the user table; and
receiving a user data message, and forwarding the user data message according to the user data forwarding table.

In an exemplary embodiment, selecting the broadband network gateway control pool instance for the user equipment according to the service deployment policy further includes:
creating tunnel configuration information between the repeater and the broadband network gateway control pool instance, configuring the repeater by using the tunnel configuration information, and establishing a forwarding tunnel between the repeater and the broadband network gateway control pool instance.

In an exemplary embodiment, the completing the access, the authentication, or the access and the authentication with the user equipment according to the user access protocol message, and generating the user table include:
authenticating the user equipment from a Authentication, Authorization, Accounting (AAA) server, and saving user policy information during an authentication process; and
generating a user table according to the user access protocol message, where the user table includes any one of or a combination of: a Virtual Local Area Network (VLAN); a Media Access Control (MAC); a point-to-point protocol session identifier (PPP Session ID); Internet Protocol (IP) address information; traffic control policy information; and multicast information.

In an exemplary embodiment, selecting the broadband network gateway control pool instance for the user equipment according to the service deployment policy further includes:
querying VLAN identifier information carried in the user access protocol message and a receiving port; and
determining that the user equipment is a newly accessed user equipment, selecting the broadband network gateway control pool instance for the newly accessed user equipment, and creating an entry of a user message load sharing table to store the broadband network gateway control pool instance to which the newly accessed user equipment is allocated.

In an exemplary embodiment, when the user table includes multicast information, the user data forwarding table further includes a multicast forwarding table including a multicast group, a multicast source, a port, and VLAN information.

Generating the user data forwarding table according to the user table includes: receiving the multicast information related to the user equipment, transmitting the multicast information related to the multicast group, the multicast source, or the multicast group and the multicast source to a core network, adding the multicast information to the multicast forwarding table and notifying the multicast information to a virtual Broadband Network Gateway (vBNG).

Forwarding, after the user data message is received, the user data message according to the user data forwarding table includes: receiving multicast traffic from the core network and, according to the multicast forwarding table, forwarding the multicast traffic to the user equipment at an access network side.

In an exemplary embodiment, receiving the user access protocol message from the user equipment includes: transmitting the user access protocol message received by an access node, and a receiving port to the controller.

Selecting the broadband network gateway control pool instance for the user equipment according to the service deployment policy further includes:
creating tunnel configuration information between the access node and the broadband network gateway control pool instance, configuring the access node by using the tunnel configuration information, and establishing a forwarding tunnel between the access node and the broadband network gateway control pool instance.

In an exemplary embodiment, the completing the access, the authentication, or the access and the authentication with the user equipment according to the user access protocol message, and generating the user table include:
generating an access protocol response message, where an Ethernet source address included in the access protocol response message is a MAC address of the vBNG, and a destination address is the MAC address of the user equipment.

An embodiment of the present disclosure further provides a virtual broadband access controller applied to a virtual broadband access system including a virtual broadband access controller, a repeater, and a broadband network gateway control pool, and the virtual broadband access controller includes:
a message load sharing module, configured to: receive a user access protocol message and a receiving port transmitted by the repeater, and select a Broadband Network Gateway control pool instance for a user equipment according to a service deployment policy; and
a user table management module, configured to: receive a user table from the BNG control pool, and transmit the user table to the repeater corresponding to the user equipment, where the repeater forwards a user data message according to a user data forwarding table generated based on the user table.

In an exemplary embodiment, the message load sharing module includes:
an identifier identifying module, configured to: query VLAN identifier information carried in the receiving port and the user access protocol message, where the VLAN identifier information includes an outer VLAN, an inner VLAN, the outer VLAN and the inner VLAN, or user MAC information; and
a new equipment identifying module, configured to: determine that the user equipment is a newly accessed user equipment, select the broadband network gateway control pool instance for the newly accessed user equipment, and create an entry of a user message load sharing table to store the broadband network gateway control pool instance to which the newly accessed user equipment is allocated; and
the controller further includes:
   a tunnel management module, configured to: create tunnel configuration information between the repeater and the broadband network gateway control pool instance, and deliver the tunnel configuration information to the repeater and an underlay network, thereby establishing a user protocol forwarding tunnel between the repeater and the broadband network gateway control pool.

In an exemplary embodiment, a tunnel management module is further configured to: create tunnel configuration information between an access node and the broadband network gateway control pool instance, configure the access network and an underlay network by using the tunnel configuration information, and establish a forwarding tunnel between the access node and the broadband network gateway control pool instance.

An embodiment of the present disclosure further provides a virtual broadband access system, including:
a repeater, configured to: receive a user access protocol message from a user equipment, and transmit the user access protocol message and a receiving port to a controller;
a broadband network gateway control pool, including at least one broadband network gateway control pool instance and configured to: complete an access, an authentication, or the access and the authentication with the user equipment according to the user access protocol message, generate a user table, and transmit the user table to the controller;
the controller, configured to: select the broadband network gateway control pool instance for the user equipment according to a service deployment policy, and transmit the user table to the repeater corresponding to the user equipment; and
the repeater, further configured to: generate a user data forwarding table according to the user table, receive a user data message, and forward the user data message according to the user data forwarding table.

In an exemplary embodiment, the controller includes: a message load sharing module, a tunnel management module, and a user table management module, where
the message load sharing module is configured to: receive the user access protocol message and the receiving port submitted by the repeater, select a virtual Broadband Network Gateway (vBNG) instance according to the service deployment policy, and transmit the vBNG instance to the tunnel management module;
the tunnel management module is configured to: create tunnel configuration information between the repeater and the vBNG, and transmit the tunnel configuration information to the repeater and an underlay network, thereby establishing a forwarding tunnel between the repeater and the broadband network gateway control pool instance; and
the user table management module is configured to: receive the user table from the BNG control pool, and transmit the user table to the repeater corresponding to the user equipment.

In an exemplary embodiment, the repeater includes: a user forwarding management module and a routing module, where
the user forwarding management module is configured to: receive the user table transmitted by the controller, and according to the user table, create the user data forwarding table and configure a routing distribution, and after receiving the user data message from an access network or a core network, forward the user data message according to an entry of the user data forwarding table; and
the routing module is configured to: receive the tunnel configuration information, and create a forwarding tunnel between the repeater and a vBNG instance according to the tunnel configuration information.

In an exemplary embodiment, the broadband network gateway control pool includes a user protocol processing module that includes a PPPoE protocol module, a dynamic host configuration protocol module, a 802.1x protocol module, and an AAA module;
the PPPoE protocol module, the DHCP module, and the 802.1x protocol module are configured to perform interactions with the user equipment; and
the AAA module is configured to: authenticate the accessed user equipment, and obtain user policy information including security, Quality of Service (QoS), multicast authorization, and charging.

In an exemplary embodiment, the PPPoE protocol module is further configured to: when the user access protocol message is a PPPoE message, receive the user access protocol message forwarded by the repeater, and after the access, the authentication, or the access and the authentication is interactively and successfully completed with the user equipment, return an access protocol response message; and
the AAA module is configured to authenticate the user equipment authentication information from an AAA server, where the AAA server and the controller are independent from each other.

In an exemplary embodiment, the message load sharing module includes:
an identifier identifying module, configured to: query VLAN identifier information carried in the receiving port and the user access protocol message, where the VLAN identifier information includes an outer VLAN, an inner VLAN, the outer VLAN and the inner VLAN, or user MAC information; and
a new equipment identifying module, configured to: determine that the user equipment is a newly accessed user equipment, select the broadband network gateway control pool instance for the newly accessed user equipment, and create an entry of a user message load sharing table to store the broadband network gateway control pool instance to which the newly accessed user equipment is allocated.

In an exemplary embodiment, the repeater is further configured to: when the user table includes multicast information, receive the multicast information delivered by the controller, transmit the multicast information including a multicast group, a multicast source, or the multicast group and the multicast source to a core network; notify the multicast information to a vBNG, receive multicast traffic from the core network, and forward the multicast traffic to the user equipment at an access network side.

In an exemplary embodiment, an access network is further included.

The access network is configured to: receive the user access protocol message, and transmit the user access protocol message and the receiving port to the controller.

The message load sharing module is further configured to apply for establishing the forwarding tunnel between the access network and the vBNG instance from the tunnel management;

The tunnel management module is further configured to: deliver the tunnel configuration information to the access network and the underlay network, thereby establishing the forwarding tunnel between the access network and the vBNG.

The DHCP module is further configured to: receive a DHCP message forwarded by the access network when the user access protocol message is the DHCP message.

The AAA module is further configured to: authenticate the user authentication information by interacting with an AAA server, and notify a vBNG user management module to save the user policy information in an authentication process.

The vBNG user management module is configured to generate a user table and transmit the user table to the controller.

An embodiment of the present disclosure further provides a computer-readable storage medium, which is configured to store computer-executable instructions for implementing the above-mentioned virtual broadband access method when the instructions are executed.

The beneficial effects of embodiments of the present disclosure are as follows. During the process of forwarding the user data message, a control function is stripped out and implemented by using virtualization technologies, and the forwarding of user data messages is controlled and implemented by the controller and other devices without deploying dedicated devices or using dedicated service boards on routing architectures known in the existing art, which reduces overall power consumption and enables high-performance forwarding.

Other aspects can be understood after the accompanying drawings and detailed description are read and understood.

### BRIEF DESCRIPTION OF DRAWINGS

FIG. 1 is an architecture diagram of a virtual broadband access system;
FIG. 2 is another architecture diagram of a virtual broadband access system;
FIG. 3 is a structural diagram of a virtual broadband access system;
FIG. 4 is another architecture diagram of a virtual broadband access system;
FIG. 5 is another architecture diagram of a virtual broadband access system;
FIG. 6 is a flowchart of processing a user access protocol message by a virtual broadband access system;
FIG. 7 is a flowchart of an optional manner for a virtual broadband access system to process a user access protocol message;
FIG. 8 is a network architecture diagram of an access device at an access network side as an Access Network;
FIG. 9 is a flowchart of processing a user access protocol message by a virtual broadband access system in an application scenario; and
FIG. 10 is a flowchart of a virtual broadband access method.

### DETAILED DESCRIPTION

Embodiments of the present disclosure will be described below in conjunction with drawings.

The embodiments of the present disclosure will be described in detail below with reference to application examples which are only used to illustrate the embodiments and not to limit the scope of the present disclosure.

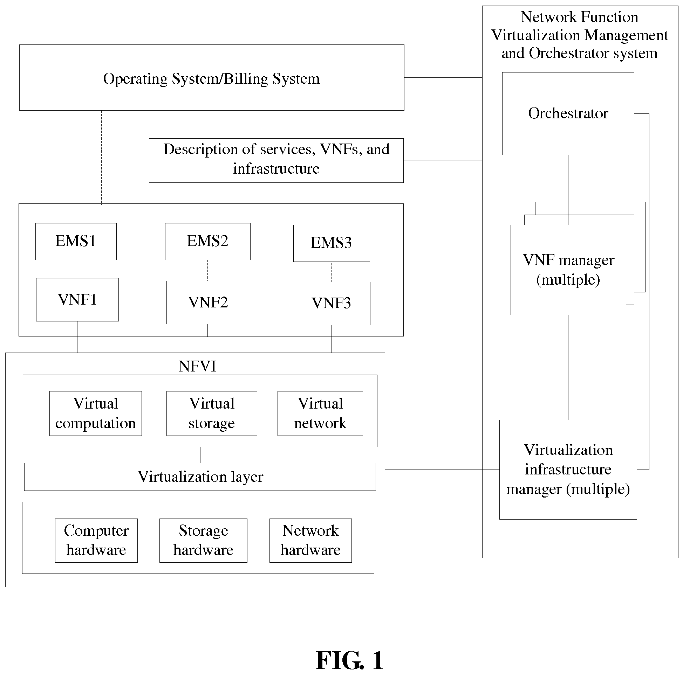

As shown in FIG. 1, in the central office, a virtual broadband access system is a general name of an Operating System/Billing System (OSS/BSS) and a Network Function Virtualization Management and Orchestrator (NFV MANO) system. The virtual broadband access system may dynamically create virtual network functions (VNFs) to provide users with various network services.

The BNG described in the present disclosure generally refers to a virtual Broadband Network Gateway (vBNG).

A controller may be configured to: create a broadband network gateway subnet for the BNG and create a subnet for a repeater, so that the repeater and other service nodes such as the vBNG may interwork with each other, and manage a user identifier (ID), the BNG subnet, a vBNG instance, repeater information, a repeater subnet and instance, a user table, and a user load sharing table. The vBNG is a general description of a function, where a vBNG instance is a system running in the computer system and can integrate various resources of the computer system.

The repeater is a central office network user protocol and data access device, may be configured to connect to an underlay network through two or more interfaces, may further be configured to initiate a connection to the controller after startup, and determine a route between users and vBNGs and the route between users and other virtual services.

A broadband network gateway control pool may be configured to: after startup, request the controller to create the subnet for the vBNG instance and the virtual service node, implement interworking between the vBNG instance and other virtual service nodes, and transmit relevant traffic information to the controller periodically or according to events.

A virtualization service pool may be configured to adopt general hardware, and may further be configured to carry out resource pooling management on the general hardware to form the virtualization service pool.

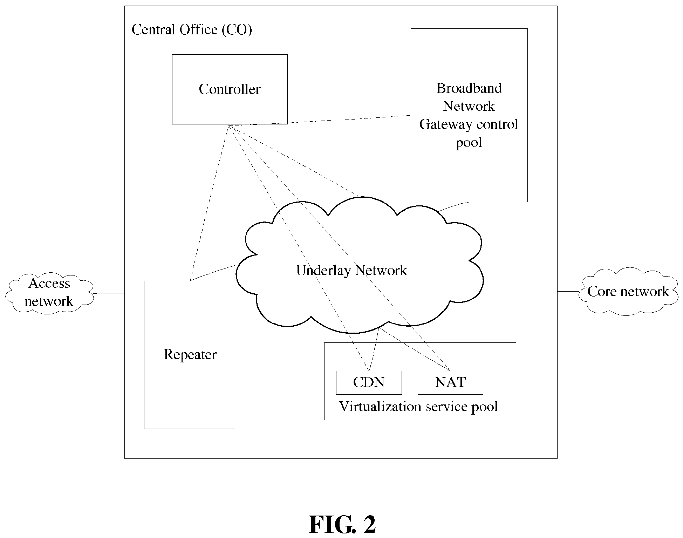

As shown in FIG. 2, the virtual broadband access system of the central office may include the underlay network, the controller, the repeater, the vBNG, and the virtualization service pool.

As shown in FIG. 2, the virtual broadband access system may dynamically create the VNF according to requirements of service deployment and operation and maintenance. The VNF runs in a Network Function Virtualization Infrastructure(NFVI) solution.

The controller may have underlay network routing information and configure the underlay network to establish an interworking routing.

The vBNG may be a VNF performing wired user access management.

VNFs such as the vBNG and Content Delivery Network (CDN), network address translation (NAT), etc. may all run on general computing devices. The vBNG, the CDN and the NAT may be dynamically increased or decreased to meet user service requirements.

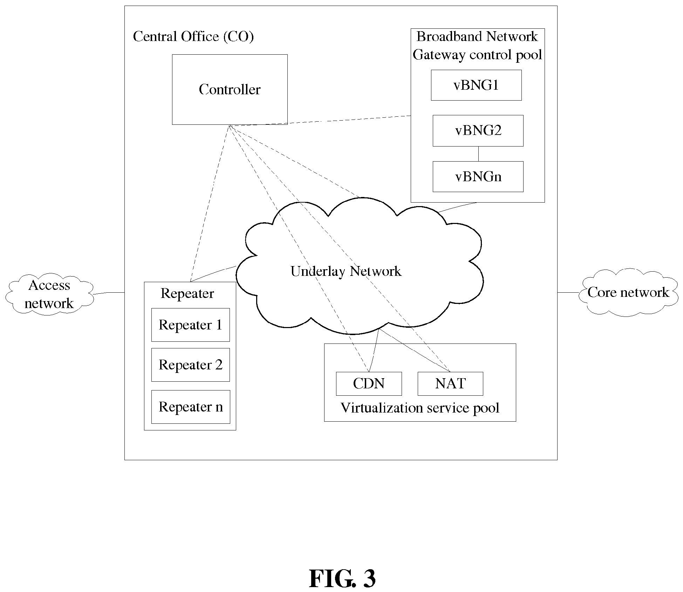

The present disclosure provides a virtual broadband access system, as shown in FIG. 3 and including:
a repeater, configured to: receive a user access protocol message from a user equipment, and transmit the user access protocol message and a receiving port to a controller;
a broadband network gateway (BNG) control pool, configured to: implement a broadband network gateway control pool instance, complete, according to the user access protocol message and the user equipment, an access, an authentication, or the access and the authentication, generate a user table, and transmit the user table to the controller;
the controller, configured to: select the BNG control pool instance according to a service deployment policy, and transmit the user table to the repeater corresponding to the user equipment; and
the repeater, further configured to: generate a user data forwarding table according to the user table, issue a user routing to a core network, receive a user data message, and forward the user data message according to the user data forwarding table.

For the virtual broadband access system provided by an application, during the process of forwarding the user data message, a control function is stripped out and implemented by using virtualization technologies, and the forwarding of user data messages is controlled and implemented by the controller and other devices without deploying dedicated devices or using dedicated service boards on routing architectures known in the related art, which reduces overall power consumption and enables high-performance forwarding.

In practical applications, the virtual broadband access system may be located in the central office, with one side being connected to an access network through which the user equipment may interwork with the virtual broadband access system, and the other side of the virtual broadband access system may being connected to a core network, where:

The user access protocol message and the user data message may be accessed to the virtual broadband access system of the central office network through the access network, the repeater may receive the user access protocol message and may transmit the user access protocol message and the receiving port to the controller.

The repeater may be an access device for the user access protocol message and the user data message of the central office network. The repeater is configured to be connected to the underlay network through two or more interfaces, and further configured to initiate a connection to the controller after startup at which time the controller may create a subnet for the repeater, so that the repeater may interwork with virtual service nodes such as the vBNG, a CDN and a NAT. The controller may be used to save information of the repeater, such as network information like IP address. And the repeater may create a user data forwarding table according to service information in the user table and forwarding-related information, and quickly forward the user data message according to the user data forwarding table.

After a vBNG instance is started, the controller may be connected. The vBNG instance may transmit to the controller, periodically or according to events, related information such as the number of access users, Central Processing Unit (CPU), load, and the like. In addition, when the virtual service nodes such as the vBNG, the CDN, or the NAT are started, the controller may be requested to create a subnet for a virtual service node such as the vBNG, so that the virtual service nodes such as the vBNG, the CDN, and the NAT may interwork with each other. The controller may be used to save information of the vBNG instance, such as the subnet and vBNG IDs of the vBNG instance. A virtual extensible local area network (VXLAN) ID is an example of the subnet ID.

In other words, the information of the repeater and the vBNG instance may all be saved by the controller.

A protocol running between the controller and the vBNG may include, but is not limited to, an open flow protocol or a Netconf, and a Restconf protocol, and the controller may allocate the vBNG instance for the user equipment.

The vBNG may process the user access protocol message, create the user table, and transmit the user table to the controller. The user table is used to configure the user data message forwarding and the routing distribution of the repeater, may include user session-related information, such as session ID, user account name, online time, authentication information, service information, and forwarding-related information, etc., may be transmitted to the controller by the vBNG, and may be delivered to the repeater by the controller.

The repeater may further be configured to: create a bidirectional forwarding path of the user equipment to other virtual service nodes according to the user table, and issue a user routing to the network side.

In the virtualization management network of the central office and in different embodiments and different applications, the virtual broadband access system that may achieve multi-service multi-user access is connected to the access network on one side and the core network on the other side to achieve the functions of the system.

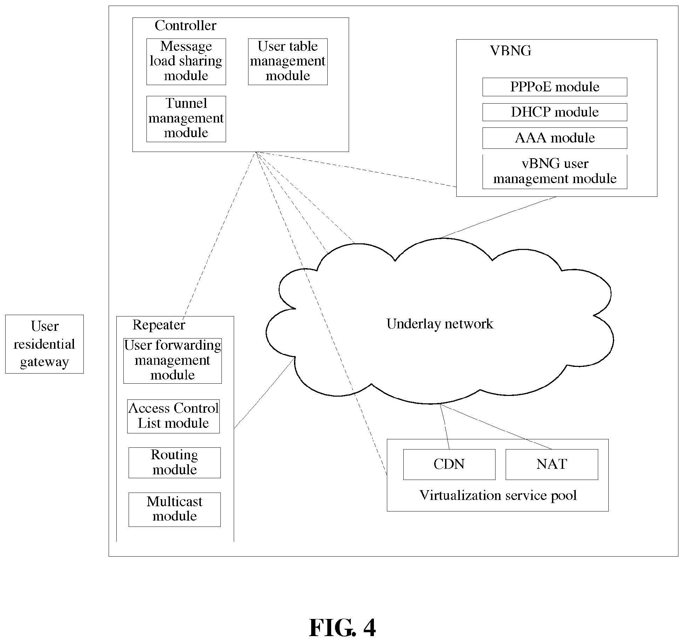

In an optional embodiment, as shown in FIG. 4, the controller may include: a message load sharing module, a tunnel management module, a user table management module, and a routing computation topology module.

The message load sharing module is configured to: receive the user access protocol message and the receiving port transmitted from the repeater, select the vBNG instance according to the service deployment policy, and transmit the vBNG instance to the tunnel management module.

The tunnel management module is configured to: create tunnel configuration information between the repeater and the vBNG, and transmit the tunnel configuration information to the repeater to configure the repeater.

The user table management module is configured to: receive the user table including user session information from the BNG control pool, and transmit the user table to the repeater corresponding to the user equipment.

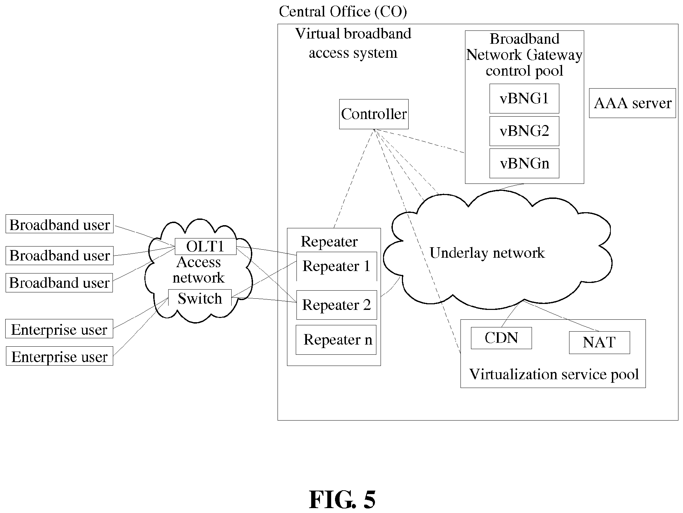

In an optional embodiment, as shown in FIG. 5, the repeater may be a user side access device of the central office, and the repeater may interconnect with the vBNG and other virtual service nodes through the underlay network. The repeater may include: a user forwarding management module, a routing module, a multicast module, an access control list (ACL), and a quality of service (QoS) module.

The routing module is configured to: receive the tunnel configuration information transmitted from the controller, and create a forwarding tunnel between the repeater and the vBNG instance according to the tunnel configuration information.

The user forwarding management module is configured to: receive the user table transmitted by the controller, and according to the user table, create the user data forwarding table and configure a routing issuing; and after receiving the user data message from the access network or the core network, forward the user data message according to an entry of the user data forwarding table.

The routing module may be configured to: receive the tunnel configuration information, and create a tunnel between the repeater and the vBNG instance.

In an optional embodiment, the user data forwarding table may include a multicast forwarding table and a Network Address Translation (NAT) forwarding table.

A starting point of user uplink traffic may be a repeater, and the starting service point of downlink traffic may be introduced by a user routing.

VNFs such as the vBNG, the CDN, and the NAT, etc. may all run on a general computing device managed by a virtualization service pool. The vBNG, the CDN and the NAT may be dynamically increased or decreased to meet user service requirements.

In an optional embodiment, the vBNG may include a user protocol processing module may including, but not being limited to: a point-to-point protocol over Ethernet (PPPoE) protocol module, a dynamic host configuration protocol (DHCP) module, a 802.1x protocol module, and an authentication, authorization and accounting (AAA) module.

The AAA module is configured to: authenticate an access of the user equipment by interacting with an AAA server, and obtain user policy information including security, QoS, multicast authorization, charging, and the like.

The vBNG may receive the user access protocol message and the receiving port forwarded by the repeater, and the PPPoE protocol module, the DHCP module, the Institute of Electrical and Electronic Engineers (IEEE) 802.1x protocol module, etc. may interact with the user equipment according to the type of the user access protocol message and can perform interactive authentication with the AAA server through the AAA module. A user management module of the vBNG may be configured to save user protocol processing information and related information obtained by the AAA module.

In an optional embodiment, the user access protocol message may be a PPPoE message or other types of messages.

A message load sharing module may be configured to query Virtual Local Area Network (VLAN) identifier information carried in the receiving port and the user access protocol message, where the VLAN identifier information includes an outer VLAN, an inner VLAN, the outer VLAN and the inner VLAN, or user media access control (MAC) information to determine if a user is an accessed user. If a user is a newly accessed user, the controller allocates the vBNG instance providing services for the newly accessed user, and creates an entry of the user message load sharing table to store the vBNG instance to which the newly accessed user is allocated.

The message load sharing module is further configured to apply for establishing a tunnel between the repeater and the vBNG instance from the tunnel management module.

The tunnel management module may be configured to: deliver the tunnel configuration information to the underlay network, thereby establishing a user protocol forwarding tunnel between the repeater and the vBNG.

The PPPoE protocol module is further configured to receive the user access protocol message forwarded by the repeater, and the access, the authentication, or the access and the authentication is interactively completed by the vBNG with the user. If the access is successful, the PPPoE protocol module may be configured to return an access protocol response message.

The AAA module interactively authenticates the user authentication information with the AAA server during the above authentication process, where the AAA server and the controller may be systems independent from each other.

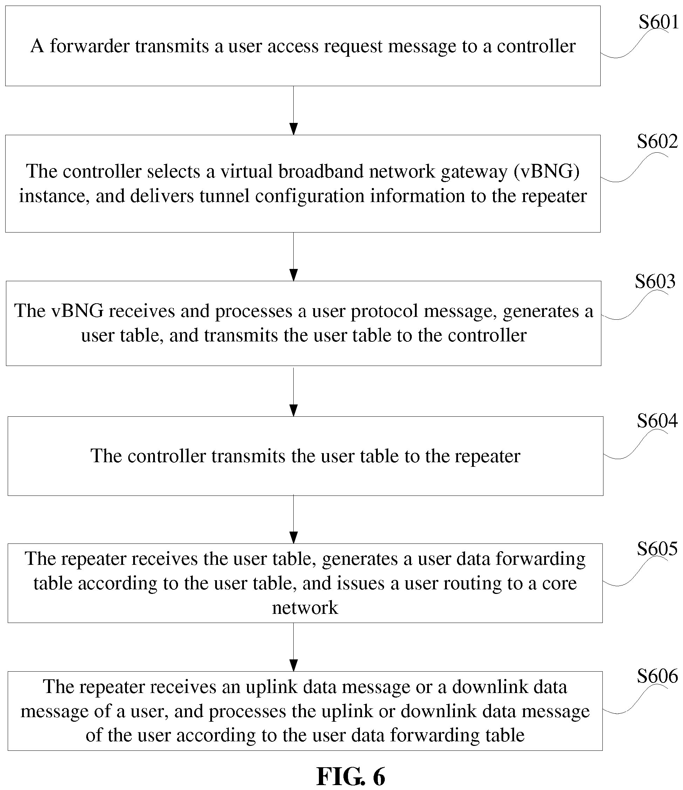

As shown in FIG. 6, the method for processing a user access protocol message by a virtual broadband access system includes steps described below.

In S601, a repeater receives the user access protocol message, and transmits the user access protocol message and a receiving port to a controller, where the user access protocol message may be a PPPoE message.

In S602, a message load sharing module queries VLAN identifier information carried in the receiving port and the user access protocol message, where the VLAN identifier information includes an outer VLAN, an inner VLAN, the outer VLAN and the inner VLAN, or user MAC information to determine if a user is an accessed user.

If the user is a newly accessed user, the controller may allocate a vBNG providing services for the newly accessed user, and create an entry of a user message load sharing table to store the vBNG to which the newly accessed user is allocated. The entry of the user message load sharing table may include, but is not limited to, a user ID, a port, a VLAN, a vBNG ID, and a repeater ID. The controller may select a vBNG instance according to a service deployment policy, such as the number of accesses for per vBNG user.

The message load sharing module applies for establishing a tunnel between the repeater and the vBNG instance from a tunnel management module.

The tunnel management module delivers tunnel configuration information to the repeater and an underlay network to establish a user protocol forwarding tunnel between the repeater and the vBNG. The tunnel forwarding information may include, but is not limited to, the port, the VLAN, a MAC, a type of protocol such as a PPPoE/DHCP/IEEE 802.1x, etc. and tunnel encapsulation information, where the tunnel encapsulation information may include, but is not limited to, a VXLAN encapsulation.

In S603, after a PPPoE protocol module receives the user access protocol message forwarded by the repeater, the vBNG interactively completes an access, an authentication, or the access and the authentication with the user.

If the access is successful, the PPPoE protocol module may return an access protocol response message such as a PPPoE/DHCP, where an ethernet source address of the access protocol response message may be a MAC address of the vBNG, and a destination address may be a MAC address of the user.

The vBNG may save user policy information during the authentication process, where the user policy information may include, but is not limited to, information such as the VLAN, the MAC, an internet protocol (IP), a session ID, an access control list (ACL), a policy-Based routing (PBR), committed access rate (CAR), hierarchical quality of service (HQoS), etc.

The vBNG may generate a user table which includes, but is not limited to, information such as the VLAN, the MAC, a point-to-point protocol (PPP) session ID, an IP address, etc., and may transmit the user table to the controller.

A vBNG AAA module may interactively authenticate user authentication information with an AAA server during the above authentication process, where the AAA server and the controller may be systems independent from each other.

The vBNG may regularly deliver information such as the number of access users and traffic to the message load sharing module in the controller.

In S604, the user table transmitted by the vBNG is received and delivered to the repeater corresponding to the user by a user table management module in the controller. One or more repeaters may be provided, and the functions of the repeater may include, but are not limited to, QoS, security policy, and the like.

In S605, the repeater receives the user table, generates a user data forwarding table, and issues a user routing to a network side. The repeater may support protocols such as open shortest path first (OSPF), intermediate system to intermediate system (ISIS), routing information protocol (RIP), and border gateway protocol (BGP).

In S606, the repeater receives an uplink data message or a downlink data message of the user, and processes the uplink or downlink data message of the user according to the user data forwarding table.

The repeater may regularly transmit traffic forwarding information to the controller.

A virtual broadband access system may be very rich in function, capable of processing not only user access protocol messages but also multicast information.

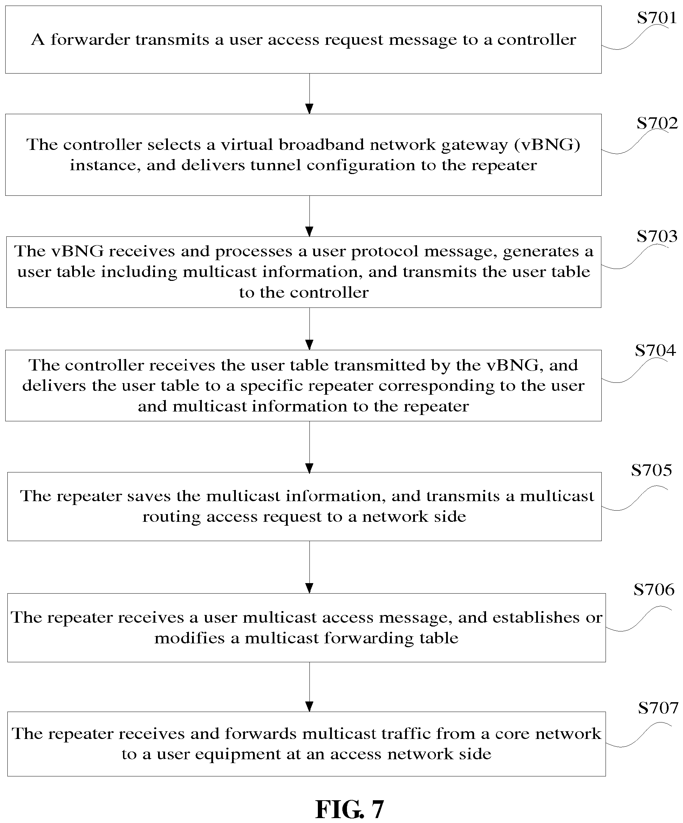

The multicast information processed by the virtual broadband access system may include: an unauthorized multicast group and an authorized multicast group. As shown in FIG. 7, in an optional embodiment, the user table may include the multicast information.

The repeater may further be configured to: receive the multicast information delivered by the controller, transmit the multicast information including the multicast group, a multicast source, or the multicast group and the multicast source to a core network, notify the multicast information to the vBNG, receive multicast traffic from the core network side, and forward the multicast traffic to the user side.

The method incudes steps described below.

Functional steps performed in steps S701-S702 are the same as the functional in steps S601-S602.

In S703, in addition to what is described in S603 about the vBNG, the user table may include the multicast information such as an authorized multicast group address, the multicast source, multicast group and multicast source addresses, the number of multicast groups, or the like.

In S704, the controller not only performs the function described in S604, but also delivers the multicast information to the repeater.

In an optional embodiment, to prevent multiple repeaters from transmitting repeated multicast group traffic to the user side, the user side may elect and deliver multicast traffic by running a protocol independent multicast (PIM) protocol through a designated router (DR).

In S705, in addition that the function described in S605 is performed, the repeater receives the multicast information related to the user, and transmits the multicast information including the multicast group, the multicast source, or the multicast group and the multicast source to the network side.

In S706, the repeater receives a multicast group access message. If an authorized multicast group is received, the added port, the VLAN information, or the port and the VLAN information of the authorized multicast group are added to the multicast forwarding table that may include, but is not limited to, information such as multicast groups, multicast sources, ports, and the VLAN information.

The repeater may notify the multicast information to the vBNG.

In S707, the repeater receives the multicast traffic from the core network side and forwards the traffic to the user side.

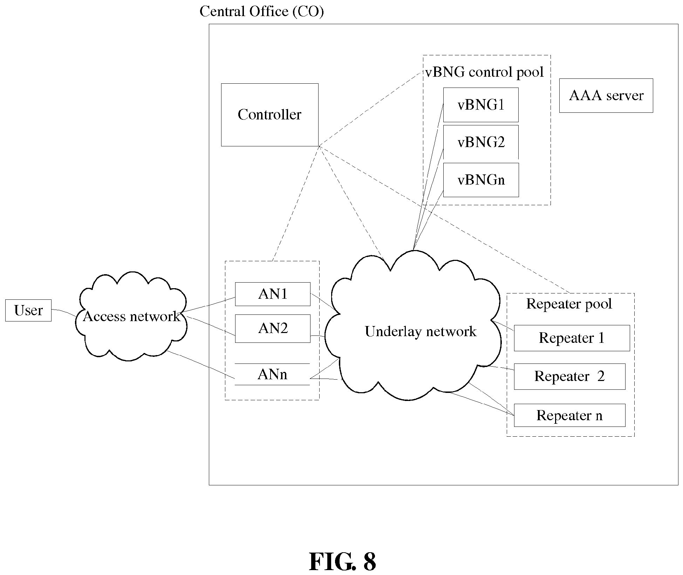

The virtual broadband access system that achieves multi-service multi-user access processes the user access protocol message and may further take an access device of the central office user side as an access node (AN). As shown in FIG. 8, in the network networking, the AN may be taken as the access device of the central office user side, and may interconnect with the repeater, the vBNG, and other virtual service nodes through the underlay network.

In an optional embodiment, a virtual broadband access system may further include:
an Access Network, configured to: receive the user access protocol message, and transmit the user access protocol message and the receiving port to the controller; a message load sharing module, configured to apply for establishing a forwarding tunnel between the AN and the vBNG instance from a tunnel management module;
the tunnel management module, configured to deliver tunnel configuration information to the underlay network, thereby establishing a user protocol forwarding tunnel between the AN and the vBNG;
a DHCP module, configured to receive a DHCP message forwarded by the AN when the user access protocol message is the DHCP message; and
an AAA module, may configured to interactively authenticates the user authentication information with an AAA server.

The DHCP module or the AAA module may inform a vBNG user management module to save and authenticate related user policy information, during which process, being taken as an example, the AAA module may obtain the user policy information from the AAA server through the protocol, may be linked with the vBNG user management module through an internal interface, and may transmit the user policy information to the vBNG user management module for saving.

The vBNG user management module is configured to generate a user table and transmit the user table to the controller.

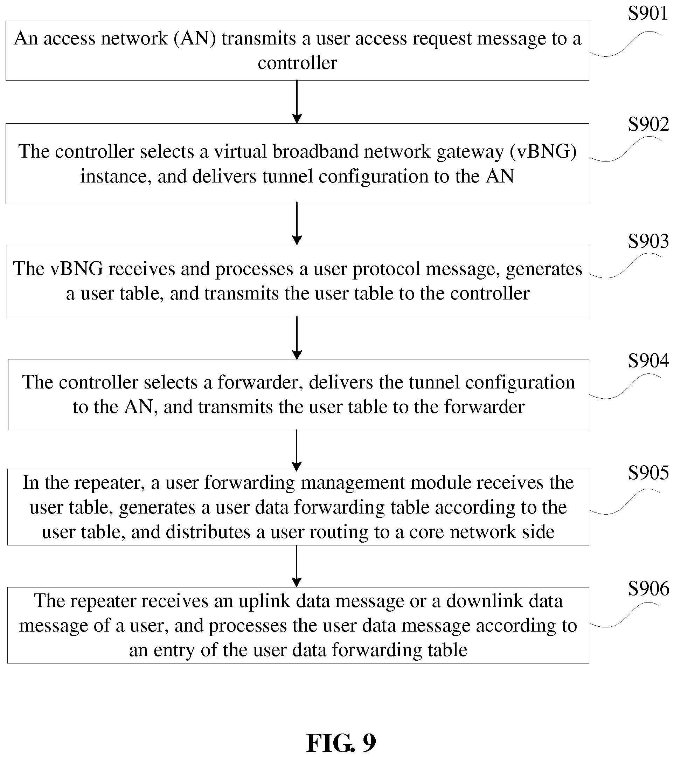

In an application scenario, as shown in FIG. 9, a virtual broadband access system that achieves multi-service multi-user access may include the following steps to process the user access protocol message, such as the DHCP message.

In S901, the AN receives the user access protocol message such as the DHCP message, and transmits the user access protocol message and the receiving port to the controller.

In S902, the message load sharing module in the controller queries VLAN identifier information carried in the receiving port and the user access protocol message to determine whether a user has been accessed, where the VLAN identifier information may include an outer VLAN, an inner VLAN, the outer VLAN and the inner VLAN, or user MAC information.

If the user is a newly accessed user, the controller may allocate a vBNG instance providing services for the newly accessed user, and create an entry of a user message load sharing table to store the vBNG to which the newly accessed user is allocated. The entry of the user message load sharing table may include, but is not limited to, a user ID, a port, a VLAN, a vBNG ID, and an AN ID.

The controller may select the vBNG instance according to a service deployment policy, such as the number of accesses for per vBNG user. In the controller, the message load sharing module applies for establishing a tunnel between the AN and the vBNG instance from a tunnel management; and the tunnel management module delivers tunnel configuration information to the AN and an underlay network to establish a user protocol forwarding tunnel between the AN and the vBNG. The tunnel forwarding information may include the port, the VLAN, a MAC, a type of protocol such as a PPPoE/DHCP/IEEE 802.1x, etc. and tunnel encapsulation information, where the tunnel encapsulation information may include, but is not limited to, a VXLAN encapsulation.

In S903, the vBNG DHCP module may receive the DHCP message forwarded by the AN. vBNG completes interactively the access, the authentication, or the access and the authentication with the user, and returns an access protocol response message if the access is successful.

The vBNG DHCP module may inform the vBNG user management module to save user policy information during the authentication process, where the user policy information may include, but is not limited to, any one of or a combination of the VLAN, the MAC, an IP, and user traffic control policy information, such as an ACL, a PBR, CAR, or HQoS.

The DHCP module may interactively authenticate the user authentication information with the AAA server through the AAA module.

The DHCP module or the AAA module may inform the vBNG user management module to save authentication-related information.

The vBNG user management module may generate a user table which includes, but is not limited to, the VLAN, the MAC, IP information and the traffic control policy information, and transmit the user table to the controller.

In S904, the user table management module in the controller may receive the user table transmitted by the vBNG, request the repeater of the user from the message load sharing module that may allocate and return the repeater information.

The load sharing module, according to the service deployment policy, may select a repeater instance such as a user load situation of each repeater.

The user table management module may transmit the user data forwarding table which may include, but is not limited to, the port, the VLAN, the MAC, the IP and the tunnel encapsulation information which may include, but is not limited to, the VXLAN encapsulation to the AN and the repeater.

In S905, the user forwarding management module in the repeater receives the user table, implements the user data forwarding table, and issues the user routing to the network side.

Optionally, the repeater supports protocols such as the OSPF, the ISIS, the RIP, and the BGP.

In S906, the repeater receives the uplink data message or the downlink data message of the user, and processes the user data message according to the user data forwarding table.

During the process, the repeater completes functions that may include, but is not limited to, QoS, security policy, etc.

In an optional embodiment, one or more ANs, one or more vBNG instances, and one or more repeaters may be provided, and the AN may be an Optical Line Terminal (OLT), a Digital Subscriber Line Access Multiplexer (DSLAM), etc.

An embodiment of the present disclosure provides a virtualization management controller applied to a virtual broadband access system. As shown in FIG. 4, the virtual broadband access system includes: a controller, a repeater, and a broadband network gateway control pool. The controller includes: a message load sharing module, configured to: receive a user access protocol message and a receiving port transmitted by the repeater, and select a Broadband Network Gateway control pool instance according to a service deployment policy; and a user table management module, configured to: receive a user table from the BNG control pool, where the user table includes user session information, and transmit the user table to the repeater corresponding to the user equipment, where the repeater forwards a user data message according to a user data forwarding table generated based on the user table.

Optionally, the message load sharing module is configured to query VLAN identifier information carried in the receiving port and the user access protocol message, where the VLAN identifier information includes an outer VLAN, an inner VLAN, the outer VLAN and the inner VLAN, or user MAC information. If the user equipment is determined to be a newly accessed user equipment, the BNG control pool instance is selected for the newly accessed user equipment, and an entry of a user message load sharing table is created to store the BNG control pool instance to which the newly accessed user is allocated.

The following module is further included in the controller.

A tunnel management module is configured to: create tunnel configuration information between the repeater and the BNG control pool instance, and deliver the tunnel configuration information to the repeater and an underlay network, thereby establishing a user protocol forwarding tunnel between the repeater and the BNG control pool.

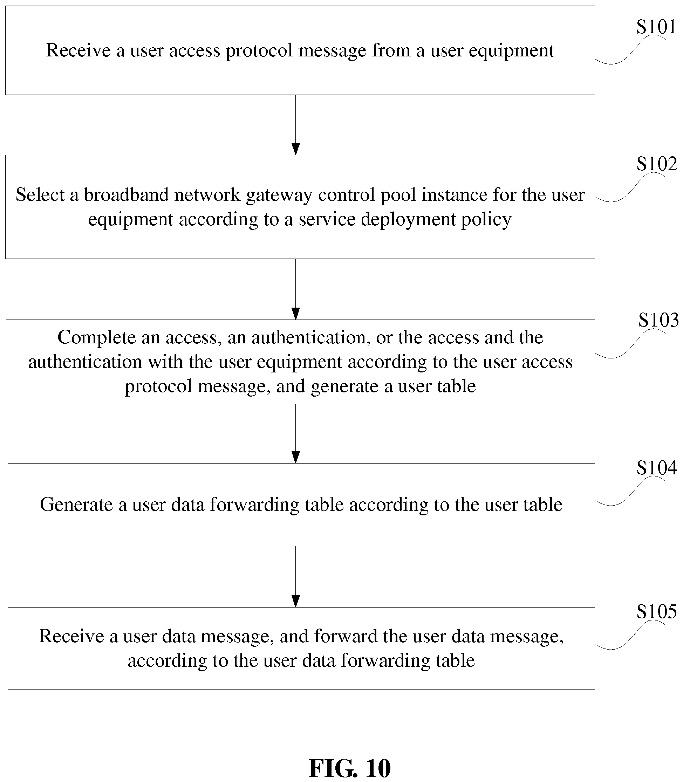

The present disclosure further provides a virtual broadband access method applied to a virtual broadband access system, and the virtual broadband access method includes a repeater, a controller, and a broadband network gateway control pool. The method includes the following steps as shown in FIG. 10.

In S101, a user access protocol message is received from a user equipment.

In S102, a broadband network gateway control pool instance is selected for the user equipment according to a service deployment policy.

In S103, an access, an authentication, or the access and the authentication with the user equipment is completed according to the user access protocol message, and a user table is generated.

In S104, a user data forwarding table is generated according to the user table.

In S105, a user data message is received and, according to the user data forwarding table, forwarded.

In an optional embodiment, after the BNG control pool instance for the user equipment is selected according to the service deployment policy, the following information is further included.

Tunnel configuration information between the repeater and the BNG control pool instance is created, the repeater is configured by using the tunnel configuration information, and a forwarding tunnel between the repeater and the BNG control pool instance is established.

Optionally, the completing the access, the authentication, or the access and the authentication with the user equipment according to the user access protocol message, and generating the user table may include that:
user authentication information of the user equipment is authenticated from an AAA server to save user policy information during the authentication process; and
according to the user access protocol message, the user table is generated, where the user table includes a VLAN, a MAC, a PPP Session ID, IP address information, traffic control policy information, multicast information, or a combination of the traffic control policy information and the multicast information.

Optionally, selecting a BNG control pool instance for the user equipment according to the service deployment policy may include that: VLAN identifier information carried in the user access protocol message and a receiving port is queried; and
after the user equipment is determined to be a newly accessed user equipment, the BNG control pool instance is selected for the newly accessed user equipment, and an entry of a user message load sharing table is created to store the BNG control pool instance to which the newly accessed user equipment is allocated.

When the user access protocol message is a PPPoE message, a message load sharing module may query VLAN identifier information carried in the receiving port and the user access protocol message, where the VLAN identifier information may include an outer VLAN, an inner VLAN, the outer VLAN and the inner VLAN, or user MAC information. If the user equipment is determined to be a newly accessed user equipment, the BNG control pool instance may be selected for the newly accessed user equipment, and the entry of the user message load sharing table is created to store the BNG control pool instance to which the newly accessed user is allocated.

The message load sharing module may further apply for establishing a tunnel between the repeater and the vBNG instance from a tunnel management module.

The tunnel management module may deliver tunnel configuration information to the repeater and an underlay network, thereby establishing a user protocol forwarding tunnel between the repeater and the vBNG.

A PPPoE protocol module may receive the user access protocol message forwarded by the repeater, and the access, the authentication, or the access and the authentication is interactively completed by the vBNG with the user equipment. If the access is successful, the PPPoE protocol module may return an access protocol response message.

An AAA module may interactively authenticate the user authentication information with the AAA server, where the AAA server and the controller may be independent from each other.

Optionally, when the user table includes multicast information, the user data forwarding table further includes a multicast forwarding table, and the multicast forwarding table includes a multicast group, a multicast source, a port, and VLAN information.

The generating the user data forwarding table according to the user table, includes that: the multicast information related to the user equipment is received, the multicast information related to the multicast group, the multicast source, or the multicast group and the multicast source is transmitted to a core network, and the multicast information is added to the multicast forwarding table and notified to a vBNG.

The forwarding, after the user data message is received, the user data message according to the user data forwarding table includes that: multicast traffic is received from the core network and, according to the multicast forwarding table, forwarded to the user equipment at an access network side.

Optionally, the receiving the user access protocol message from the user equipment includes that: the user access protocol message received by an access network, and a receiving port are transmitted to the controller.

The selecting the BNG control pool instance for the user equipment according to the service deployment policy further includes that: tunnel configuration information between the access network and the BNG control pool instance is created, the access network is configured by using the tunnel configuration information, and a forwarding tunnel is established between the access network and the BNG control pool instance.

Optionally, when the user access protocol message is a DHCP message, a DHCP module receives the DHCP message forwarded by the AN, and may interactively authenticate the user authentication information with the AAA server through the AAA module.

The DHCP module or the AAA module may inform a vBNG user management module to save user policy information during the authentication process; and

The vBNG user management module generates a user table and transmits the user table to the controller.

Optionally, according to the user access protocol message, after the access, the authentication, or the access and the authentication with the user equipment is completed, what is further included is: generating an access protocol response message, where an Ethernet source address included in the access protocol response message is a MAC address of the vBNG, and a destination address is the MAC address of the user equipment.

An embodiment of the present disclosure further provides a virtual broadband access network including an access network, a core network, a virtual broadband access system package, and a user equipment that connects to the access network.

A virtual broadband access system includes:
a repeater, configured to: receive a user access protocol message from a user equipment, and transmit the user access protocol message and a receiving port to a controller;
a controller, configured to: select a Broadband Network Gateway control pool vBNG instance according to a service deployment policy, and create tunnel configuration information between the repeater and the BNG control pool;
a Broadband Network Gateway control pool, configured to: implement a vBNG instance, complete, according to the user access protocol message and the user equipment, an access, an authentication, or the access and the authentication, generate a user table, and transmit the user table to the controller;
the controller, configured to: transmit the user table to the repeater corresponding to the user equipment; and
the repeater, further configured to: generate a user data forwarding table according to the user table, issue a user routing to a core network, receive a user data message, and forward the user data message according to the user data forwarding table.

Optionally, the controller includes a message load sharing module, a routing computation topology module, a tunnel management module, and a user table management module, where the message load sharing module is configured to: receive the user access protocol message and the receiving port submitted by the repeater, select the vBNG instance according to the service deployment policy, and transmit the vBNG instance to the tunnel management module.

The routing computation topology module is configured to: calculate a tunnel between the repeater and the vBNG, and optionally find IP addresses of a head node and a tail node of the tunnel, and perform corresponding processing.

The tunnel management module is configured to: create tunnel configuration information between the repeater and the vBNG, and transmit the tunnel configuration information to the repeater to configure the repeater.

The user table management module is configured to: receive the user table from the BNG control pool, where the user table includes user session information.

Optionally, the repeater includes: a user forwarding management module and a routing module.

The user forwarding management module is configured to: receive the user table transmitted by the controller, where the user table is used to configure the repeater forwarding user data message and a routing distribution, create the user data forwarding table, and after receiving the user data message from the access network or the core network, forward the user data message according to the user data forwarding table.

The routing module is configured to: receive the tunnel configuration information, and create a tunnel between the repeater and the vBNG.

Optionally, the vBNG, a CDN, and a NAT all run on hardware of a general computing device managed by the virtualization service pool, and all belong to a virtualized network function (VNF).

The BNG control pool may include a user protocol processing module that may include a PPPoE protocol module, a dynamic host configuration protocol module, a 802.1x protocol module, and an AAA module.

The PPPoE protocol module, the DHCP module, and the 802.1x protocol module may be configured to perform interactions with the user equipment; and

The AAA module may be configured to: authenticate an access of the user equipment, and obtain user policy information including security, QoS, multicast authorization, and charging.

The virtualization service pool may further be configured to: dynamically increase or decrease the quantity of the vBNG, the CDN and the NAT.

Optionally, the user access protocol message is a PPPoE message. A message load sharing module is configured to query VLAN identifier information carried in the receiving port and the user access protocol message, where the VLAN identifier information includes an outer VLAN, an inner VLAN, the outer VLAN and the inner VLAN, or user MAC information to determine if the user equipment has been accessed. If the user equipment is a newly accessed user equipment, the vBNG instance providing services for the newly accessed user equipment is allocated, and an entry of the user message load sharing table is created to store the vBNG instance to which the newly accessed user equipment is allocated;

The message load sharing module is further configured to apply for establishing a tunnel between the repeater and the vBNG instance from the tunnel management module.

The tunnel management module is configured to: deliver the tunnel configuration information to an underlay network, thereby establishing a user protocol forwarding tunnel between the repeater and the vBNG.

The PPPoE protocol module is configured to: receive the user access protocol message forwarded by the repeater, and the access, the authentication, or the access and the authentication is interactively completed by the vBNG with the user equipment. If the access is successful, the PPPoE protocol module returns an access protocol response message.

The AAA module is configured to: interactively authenticate the user equipment authentication information with the AAA server, where the AAA server and the controller are independent from each other.

Optionally, the user table includes multicast information, and the repeater may further be configured to: receive the multicast information delivered by the controller, transmit the multicast information related to a multicast group, a multicast source, or the multicast group and the multicast source to the core network, notify the multicast information to the vBNG, receive multicast traffic from the core network side, and forward the multicast traffic to the user equipment side.

Optionally, an Access Network may be further included. The access network is configured to: receive the user access protocol message, and transmit the user access protocol message and the receiving port to the controller.

The message load sharing module is configured to apply for establishing the tunnel between the AN and the vBNG instance from the tunnel management.

The tunnel management module is configured to deliver tunnel configuration information to the underlay network, thereby establishing the user protocol forwarding tunnel between the AN and the vBNG.

A DHCP module, configured to receive a DHCP message forwarded by the AN when the user access protocol message is the DHCP message, and may interactively authenticate the user authentication information with the AAA server through the AAA module.

The DHCP module or the AAA module informs a vBNG user management module to save user policy information during the authentication process.

The vBNG user management module is configured to generate a user table and transmit the user table to the controller.

A repeater completion function may include QoS and security policy functions.

One or more ANs, one or more vBNG instances, and one or more repeaters may be provided, and the AN may be any one of an OLT, a DSLAM, a switch, and an openflow switch.

For embodiments of the present disclosure, during the process of forwarding the user data message, a control function is stripped out and implemented by using virtualization technologies, and the forwarding of user data messages is controlled and implemented by the controller and other devices without deploying dedicated devices or using dedicated service boards on routing architectures known in the existing art, which reduces overall power consumption and enables high performance forwarding. By virtualizing the BNG user session, session-related management may be dynamically extended and related services may be flexibly extended according to deployment requirements.

An embodiment of the present disclosure further provides a computer-readable storage medium, which is configured to store computer-executable instructions for implementing the above-mentioned virtual broadband access method when the instructions are executed.

Optional embodiments of the present disclosure are described above. It will be understood by those of ordinary skill in the art that all or part of the steps in the methods described above may be implemented by related hardware (e.g., a processor) instructed by programs that may be stored in the computer-readable storage medium such as a Read-Only Memory, a magnetic disk, an optical disk or the like. Optionally, all or part of the steps in the embodiments described above may also be implemented by using one or more integrated circuits. Accordingly, each module/unit in the embodiments described above may be implemented by hardware, for example, the functions of these modules/units may be implemented by integrated circuits; or may be implemented by software function modules, for example, the functions of these modules/units may be implemented by using a processor to execute programs/instructions stored in a storage medium. Embodiments of the present disclosure are not limited to any specific combination of hardware and software.

It will be understood by those of ordinary skill in the art that functional modules/units in all or part of the steps of the method, the system, and the device disclosed above may be implemented as software, firmware, hardware, and appropriate combinations thereof. In the hardware implementation, the division of functional modules/units mentioned in the above description may not correspond to the division of physical components. For example, one physical component may have several functions, or one function or step may be executed jointly by several physical components. Some or all components may be implemented as software executed by processors such as digital signal processors or microprocessors, hardware, or integrated circuits such as application specific integrated circuits. Such software may be distributed on computer-readable media, which may include computer storage media (non-transitory media) and communication media (transitory media). As is known to those of ordinary skill in the art, the term, computer storage media, includes volatile and nonvolatile, removable and non-removable media implemented in any method or technology for storing information (such as computer-readable instructions, data structures, program modules or other data). Computer-storage media include, but are not limited to, Random Access Memory (RAM), Read-Only Memory (ROM), Electrically Erasable Programmable Read-only Memory (EEPROM), flash memory or other memory technologies, Compact Disc Read-Only Memory (CD-ROM), Digital Versatile Disc (DVD) or other optical disc storage, magnetic cassettes, magnetic tapes, disk storage or other magnetic storage devices, or any other medium used to store the desired information and that may be accessed by a computer. In addition, as is known to those or ordinary skill in the art, communication media generally include computer-readable instructions, data structures, program modules, or other data in modulated data signals such as carriers or other transmission mechanisms, and may include any information delivery media.

It will be understood by those of ordinary skill in the art that the technical solutions of the present disclosure may be modified or replaced equivalently without departing from the spirit and scope of the technical solutions of the present disclosure and within the scope of the claims of the present disclosure.

### INDUSTRIAL APPLICABILITY

During the process of forwarding the user data message, a control function is stripped out and implemented by using virtualization technologies, and the forwarding of user data messages is controlled and implemented by the controller and other devices, which reduces overall power consumption and enables high-performance forwarding by using the embodiments in the present disclosure.

## Claims

1. A virtual broadband access method, applied in a virtual broadband access system, **characterised in that** the virtual broadband access system comprises a repeater, a controller and a broadband network gateway control pool, and the method comprises:
receiving a user access protocol message from a user equipment;
selecting a broadband network gateway control pool instance for the user equipment according to a service deployment policy;
completing an access, an authentication, or the access and the authentication with the user equipment according to the user access protocol message, and generating a user table;
generating a user data forwarding table according to the user table; and
receiving a user data message, and forwarding the user data message according to the user data forwarding table.

2. The method of claim 1, wherein the selecting the broadband network gateway control pool instance for the user equipment according to the service deployment policy further comprises:
creating tunnel configuration information between the repeater and the broadband network gateway control pool instance, configuring the repeater by using the tunnel configuration information, and establishing a forwarding tunnel between the repeater and the broadband network gateway control pool instance.

3. The method of claim 1, wherein the completing the access, the authentication, or the access and the authentication with the user equipment according to the user access protocol message, and generating the user table, further comprises:
authenticating the user equipment from an authentication, authorization and accounting, AAA server, and saving user policy information during an authentication process; and
generating the user table according to the user access protocol message, wherein the user table comprises any one of or a combination of: a virtual local area network, VLAN; a media access control, MAC; a point-to-point protocol session identifier, PPP Session ID; internet protocol, IP, address information; traffic control policy information; and multicast information.

4. The method of claim 1, wherein the selecting the broadband network gateway control pool instance for the user equipment according to the service deployment policy comprises:
querying VLAN identifier information carried in the user access protocol message and a receiving port; and
determining that the user equipment is a newly accessed user equipment, selecting the broadband network gateway control pool instance for the newly accessed user equipment, and creating an entry of a user message load sharing table to store the broadband network gateway control pool instance to which the newly accessed user equipment is allocated.

5. The method of claim 1, wherein when the user table comprises multicast information, the user data forwarding table further comprises a multicast forwarding table, wherein the multicast forwarding table comprises a multicast group, a multicast source, a port and VLAN information;
wherein the generating the user data forwarding table according to the user table comprises:
receiving the multicast information related to the user equipment, and transmitting the multicast information comprising the multicast group, the multicast source, or the multicast group and the multicast source to a core network; adding the multicast information to the multicast forwarding table, and notifying the multicast information to a virtual broadband network gateway, vBNG; and
wherein the receiving the user data message, and forwarding the user data message according to the user data forwarding table, comprises: receiving multicast traffic from the core network, and forwarding the multicast traffic to the user equipment at an access network side according to the multicast forwarding table.

6. The method of claim 1, wherein the receiving the user access protocol message from the user equipment comprises: transmitting the user access protocol message received by an access node and a receiving port to the controller; and
wherein after the selecting the broadband network gateway control pool instance for the user equipment according to the service deployment policy, the method further comprises:
creating tunnel configuration information between the access node and the broadband network gateway control pool instance, configuring the access node by using the tunnel configuration information, and establishing a forwarding tunnel between the access node and the broadband network gateway control pool instance.

7. The method of claim 1, wherein the completing the access, the authentication, or the access and the authentication with the user equipment according to the user access protocol message further comprises:
generating an access protocol response message, wherein an Ethernet source address included in the access protocol response message is a media access control, MAC address of a vBNG, and a destination address is a MAC address of the user equipment.

8. A virtual broadband access controller, applied in a virtual broadband access system, **characterised in that** the virtual broadband access system comprises a virtual broadband access controller, a repeater, and a broadband network gateway control pool, and comprising:
a message load sharing module, which is configured to: receive a user access protocol message and a receiving port transmitted from the repeater, and select a broadband network gateway control pool instance for a user equipment according to a service deployment policy; and
a user table management module, which is configured to: receive a user table from the broadband network gateway control pool, and transmit the user table to the repeater corresponding to the user equipment, wherein the repeater forwards a user data message according to a user data forwarding table generated based on the user table.

9. The controller of claim 8, wherein the message load sharing module comprises:
an identifier identifying module, which is configured to: query virtual local area network, VLAN, identifier information carried in the receiving port and the user access protocol message, wherein the VLAN identifier information comprises an outer VLAN, an inner VLAN, the outer VLAN and the inner VLAN, or user media access control, MAC information; and
a new equipment identifying module, which is configured to: determine that the user equipment is a newly accessed user equipment, select the broadband network gateway control pool instance for the newly accessed user equipment, and create an entry of a user message load sharing table to store the broadband network gateway control pool instance to which the newly accessed user equipment is allocated; and
wherein the controller further comprises:
a tunnel management module, which is configured to: create tunnel configuration information between the repeater and the broadband network gateway control pool instance, deliver the tunnel configuration information to the repeater and an underlay network, and establish a user protocol forwarding tunnel between the repeater and the broadband network gateway control pool.

10. The controller of claim 8, wherein the tunnel management module is further configured to create tunnel configuration information between an access node and the broadband network gateway control pool instance, configure the access node and an underlay network by using the tunnel configuration information, and establish a forwarding tunnel between the access node and the broadband network gateway control pool instance.

11. A virtual broadband access system, comprising:
a repeater, which is configured to: receive a user access protocol message from a user equipment, and transmit the user access protocol message and a receiving port to a controller;
a broadband network gateway control pool, comprising at least one broadband network gateway control pool instance and configured to: complete an access, an authentication, or the access and the authentication with the user equipment according to the user access protocol message; and generate a user table, and transmit the user table to the controller; and
the controller, which is configured to: select, according to a service deployment policy, the broadband network gateway control pool instance for the user equipment, and transmit the user table to the repeater corresponding to the user equipment;
wherein the repeater is further configured to: generate a user data forwarding table according to the user table; receive a user data message, and forward the user data message according to the user data forwarding table.

12. The virtual broadband access system of claim 11, wherein the controller comprises: a message load sharing module, a tunnel management module and a user table management module;
wherein the message load sharing module is configured to: receive the user access protocol message and the receiving port transmitted from the repeater, select, according to the service deployment policy, a virtual broadband network gateway, vBNG, control pool instance for the user equipment, and transmit the vBNG instance to the tunnel management module;
wherein the tunnel management module is configured to: create tunnel configuration information between the repeater and the vBNG, and transmit the tunnel configuration information to the repeater and an underlay network, thereby establishing a forwarding tunnel between the repeater and the BNG control pool instance; and
wherein the user table management module is configured to: receive the user table from the broadband network gateway control pool, and transmit the user table to the repeater corresponding to the user equipment.

13. The virtual broadband access system of claim 11, wherein the repeater comprises a user forwarding management module and a routing module;
wherein the user forwarding management module is configured to: receive the user table transmitted from the controller, create, according to the user table, the user data forwarding table and configure a routing distribution; and forward the user data message according to an entry of the user data forwarding table after receiving the user data message from an access network or a core network; and
wherein the routing module is configured to: receive tunnel configuration information transmitted from the controller, and create a forwarding tunnel between the repeater and a vBNG instance according to the tunnel configuration information.

14. The virtual broadband access system of claim 11, 12 or 13, wherein the broadband network gateway control pool comprises a user protocol processing module, wherein the user protocol processing module comprises a point-to-point protocol over Ethernet, PPPoE, protocol module, a dynamic host configuration protocol, DHCP, module, a 802.1x protocol module, and an authentication, authorization and accounting, AAA, module;
wherein the PPPoE protocol module, the DHCP module, and the 802.1x protocol module are configured to: perform interactions with the user equipment; and
wherein the AAA module is configured to: authenticate an accessed user equipment, and obtain user policy information, wherein the user policy information comprises security, quality of service, QoS, multicast authorization and charging.

15. The virtual broadband access system of claim 14, wherein the AAA module is configured to authenticate the user equipment authentication information from an AAA server, wherein the AAA server and the controller are independent from each other; and
wherein the PPPoE protocol module is further configured to: when the user access protocol message is a PPPoE message, receive the user access protocol message forwarded by the repeater, and after the access, the authentication, or the access and the authentication is completed interactively with the user equipment, return an access protocol response message.

16. The virtual broadband access system of claim 12, wherein the message load sharing module comprises:
an identifier identifying module, which is configured to: query the receiving port and VLAN identifier information carried in the user access protocol message, wherein the VLAN identifier information comprises an outer VLAN, an inner VLAN, the outer VLAN and the inner VLAN, or user MAC information; and
a new equipment identifying module, which is configured to determine that the user equipment is a newly accessed user equipment, select the BNG control pool instance for the newly accessed user equipment, and create an entry of a user message load sharing table to store the BNG control pool instance to which the newly accessed user equipment is allocated.

17. The virtual broadband access system of claim 11, wherein the repeater is further configured to: when the user table comprises multicast information, receive the multicast information delivered by the controller, transmit the multicast information comprising a multicast group, a multicast source, or the multicast group and the multicast source to a core network; notify the multicast information to a vBNG; and receive multicast traffic from the core network and forward the multicast traffic to the user equipment at an access network side.

18. The virtual broadband access system of claim 14, further comprising an access node, wherein the access node is configured to: receive the user access protocol message, and transmit the user access protocol message and the receiving port to the controller;
wherein the message load sharing module is further configured to: apply for establishing the forwarding tunnel between the access node and the vBNG instance from the tunnel management module;
wherein the tunnel management module is further configured to: deliver the tunnel configuration information to the access node and the underlay network, thereby establishing the forwarding tunnel between the access node and the vBNG;
wherein the DHCP module is further configured to receive a DHCP message forwarded by the access node when the user access protocol message is the DHCP message;
wherein the AAA module is further configured to authenticate the user equipment from an AAA server, and notify a vBNG user management module to save the user policy information in an authentication process; and
the vBNG user management module is configured to generate the user table and transmit the user table to the controller.
